# EUROPÄISCHE PATENTANMELDUNG

(11) **EP 2 525 278 A2**
(43) Veröffentlichungstag der Anmeldung: **21.11.2012**
(21) Anmeldenummer: 12003847.6
(22) Anmeldetag: 15.05.2012
(51) Int. Cl.: G06F 3/042

(54) **Optisache Anzeige- und Bedienelement und Verfahren zur optischen Positionsbestimmung**

(30) Priorität: 17.05.2011 DE 102011101782
(71) Anmelder: TRW Automotive Electronics & Components GmbH, 78315 Radolfzell (DE)
(72) Erfinder: Backes, Dr. Ulrich,, 78315 Radolfzell (DE)
(74) Vertreter: Prinz & Partner

(57) **Zusammenfassung**

Ein optisches Anzeige- und Bedienelement umfasst einen zumindest teilweise transparenten Anzeigebildschirm (12), zumindest eine Lichtquelle (14) zur Beleuchtung einer Rückseite des Anzeigebildschirms (12), und zumindest einen Lichtsensor (24, 26) zur Erfassung eines zeitlichen Signals des am Anzeigebildschirm (12) gestreuten Lichts (25, 28). Die Lichtquelle (14) ist ausgebildet, um ein zeitlich veränderliches Lichtmuster bei der Beleuchtung der Rückseite des Anzeigebildschirms (12) erzeugen zu können. Eine Steuer- und Verarbeitungseinheit (30) ist vorgesehen, welche ausgebildet ist, um das durch den Lichtsensor (24, 26) erfasste zeitliche Signal in Verbindung mit dem zeitlich veränderlichen Lichtmuster auswerten zu können und aus dieser Auswertung eine Position zumindest eines am Anzeigebildschirm (12) angeordneten Objekts (32) bestimmen zu können.

Die Erfindung betrifft ferner ein Verfahren zur optischen Positionsbestimmung eines Objekts (32), welches an einem zumindest teilweise transparenten Anzeigebildschirm (12) eines optischen Anzeige- und Bedienelements (10) angeordnet ist.

## Beschreibung

Die Erfindung betrifft ein optisches Anzeige- und Bedienelement mit einem zumindest teilweise transparenten Anzeigebildschirm, zumindest einer Lichtquelle zur Beleuchtung einer Rückseite des Anzeigebildschirms und zumindest einem Lichtsensor zur Erfassung eines zeitlichen Signals des am Anzeigebildschirm gestreuten Lichts. Ferner betrifft die Erfindung ein Verfahren zur optischen Positionsbestimmung eines Objekts, welches an einem zumindest teilweise transparenten Anzeigebildschirm eines optischen Anzeige- und Bedienelements angeordnet ist.

Ein gattungsgemäßes optisches Anzeige- und Bedienelement ist aus der US 2010/0182137 A1 bekannt. Ein transparenter Anzeigebildschirm wird auf seiner Rückseite von einem Projektor beleuchtet. Eine Videokamera ist vorgesehen, welche auf die Rückseite des Anzeigebildschirms gerichtet ist und ein Bild der Rückseite des Anzeigebildschirms aufnehmen kann. Durch Analyse der zweidimensionalen Bilddaten kann beispielsweise die Position eines Fingers oder Zeigestabs am Anzeigebildschirm bestimmt werden, um eine Berührbildschirmfunktion zu ermöglichen. Die Erfassung und Analyse der zweidimensionalen Bilddaten ist aufwendig.

Aufgabe der Erfindung ist es, ein optisches Anzeige- und Bedienelement zu schaffen, welches auf einfache Weise und somit kostengünstig herstellbar eine Bestimmung einer Position eines am Anzeigebildschirm angeordneten Objekts ermöglicht.

Aufgabe der Erfindung ist es ferner, ein vorteilhaftes Verfahren zur optischen Positionsbestimmung zu schaffen.

Diese Aufgabe wird durch ein gattungsgemäßes optisches Anzeige- und Bedienelement gelöst, wobei die Lichtquelle ausgebildet ist, um ein zeitlich veränderliches Lichtmuster bei der Beleuchtung der Rückseite des Anzeigebildschirms erzeugen zu können, und eine Steuer- und Verarbeitungseinheit vorgesehen ist, welche ausgebildet ist, um das durch den Lichtsensor erfasste zeitliche Signal in Verbindung mit dem zeitlich veränderlichen Lichtmuster auswerten zu können und aus dieser Auswertung eine Position zumindest eines am Anzeigebildschirm angeordneten Objekts bestimmen zu können. Dies ermöglicht eine Positionsbestimmung aufgrund der zeitlichen Information, wodurch keine aufwendige Bilderfassung und -erkennung benötigt wird.

Beispielsweise ist eine Ablenkeinheit vorgesehen, welche zur Erzeugung des zeitlich veränderlichen Lichtmusters ein Abtasten des Anzeigebildschirms durch einen Lichtstrahl der Lichtquelle ermöglicht.

Es ist auch möglich, dass die Lichtquelle ausgebildet ist, um den Anzeigebildschirm mit einer zeitlichen Sequenz verschiedener flächiger Lichtmuster, insbesondere Helligkeitsmuster, zur Erzeugung des zeitlich veränderlichen Lichtmusters beleuchten zu können.

Vorzugsweise umfasst die zeitliche Sequenz der flächigen Lichtmuster zumindest einen Lichtmustersatz, wobei der Lichtmustersatz zeitlich aufeinanderfolgende Lichtmuster aufweist, welche eine iterative Positionsbestimmung ermöglichen.

Aufgrund der Nachbildwirkung kann die zeitliche Sequenz der flächigen Lichtmuster so schnell abfolgen, vorzugsweise mit aufeinanderfolgenden komplementären Lichtmustern, dass die einzelnen Lichtmuster nicht mit dem bloßem Auge wahrgenommen werden können, insbesondere mindestens 16 Lichtmuster pro Sekunde.

Vorzugsweise ist die Lichtquelle ausgebildet, um den Anzeigebildschirm mit einem Anzeigebild zu beleuchten, wobei das Anzeigebild mit einem flächigen oder zeitlich veränderlichen Lichtmuster moduliert ist.

Die zeitlich veränderlichen Lichtmuster können unabhängig von einer sichtbaren Anzeige-Rückprojektion erzeugt werden, wenn die Lichtquelle eine IR-Lichtquelle ist.

Alternativ kann die Lichtquelle sichtbares Licht erzeugen, wodurch die sichtbare Anzeige-Rückprojektion und die Erzeugung der zeitlich veränderlichen Lichtmuster durch eine gemeinsame Lichtquelle möglich sind.

Eine besonders flexible Bedienung des Anzeige- und Bedienelements wird ermöglicht, indem das Anzeige- und Bedienelement ein Berührungsbildschirm ist. In diesem Fall ist das zu bestimmende Objekt am Anzeigebildschirm ein Finger oder Zeigestab.

Es ist auch möglich, dass ein am Anzeigebildschirm angebrachtes Bedienelement vorgesehen ist, welches auf einer der Lichtquelle zugewandten Seite eine optische Codierung aufweist, welche eine Position des Bedienelements codiert. Dies ermöglicht beispielsweise eine optische Erkennung der Stellung eines Schalters.

Das Bedienelement kann einen integrierten Lichtleiter aufweisen, welcher durch die Lichtquelle beleuchtet werden kann. Dies ermöglicht auf einfache Weise eine Beleuchtung des Bedienelements.

Beispielsweise ist zumindest ein Lichtsensor anordnet, um vom Anzeigebildschirm einfach rückgestreutes Licht zu empfangen.

Es ist auch möglich, dass zumindest ein Lichtsensor anordnet ist, um ein im Anzeigebildschirm mehrfach reflektiertes Licht zu empfangen. Dies ermöglicht eine kompakte Ausführungsform, bei der der Anzeigebildschirm als Lichtleiter wirkt.

Eine einfache und kostengünstige Ausführung wird ermöglicht, da der zumindest eine Lichtsensor ein einkanaliger Lichtsensor sein kann.

Ein erfindungsgemäßes Verfahren zur optischen Positionsbestimmung eines Objekts, welches an einem zumindest teilweise transparenten Anzeigebildschirm eines optischen Anzeige- und Bedienelements angeordnet ist, umfasst die folgenden Verfahrensschritte. Eine Rückseite des Anzeigebildschirms wird mit einem zeitlich veränderlichen Lichtmuster beleuchtet. Ein zeitliches Signal des am Anzeigebildschirm und am Objekt gestreuten Lichts wird erfasst, und die Position des Objekts wird durch zeitliche Korrelation des erfassten zeitlichen Signals mit dem zeitlich veränderlichen Lichtmuster bestimmt. Dies ermöglicht eine Erfassung der Position des Objekts aufgrund der zeitlichen Information, wodurch auf eine aufwendige, zweidimensionale Bilderfassung und Bildanalyse verzichtet werden kann.

Besonders einfach kann das zeitlich veränderliche Lichtmuster durch Abtasten der Rückseite des Anzeigebildschirms mit einem Lichtstrahl erzeugt werden.

Alternativ ist es möglich, dass das zeitlich veränderliche Lichtmuster durch eine zeitliche Sequenz verschiedener flächiger Lichtmuster erzeugt wird.

Beispielsweise kann die zeitliche Sequenz verschiedener flächiger Lichtmuster aufeinanderfolgende Lichtmuster aufweisen, welche eine iterative Positionsbestimmung ermöglichen.

Vorzugsweise folgt die zeitliche Sequenz der flächigen Lichtmuster so schnell ab, insbesondere mit mindestens 16 Lichtmustem pro Sekunde, dass die einzelnen Lichtmuster nicht mit dem bloßen Auge wahrgenommen werden können.

Insbesondere kann die zeitliche Sequenz verschiedener flächiger Lichtmuster aufeinanderfolgende komplementäre Lichtmuster aufweisen.

Es ist möglich, dass die Rückseite des Anzeigebildschirms zur Erzeugung eines Anzeigebilds, vorzugsweise zur veränderlichen Wiedergabe von Informationen, beleuchtet wird. Auf diese Weise kann das optische Anzeige- und Bedienelement individuell angepasst werden und/oder für eine Vielzahl verschiedener Funktionen genutzt werden.

Es ist möglich, dass das zeitlich veränderliche Lichtmuster durch eine zeitlich veränderliche oder flächige Modulation, vorzugsweise eine Amplitudenmodulation, des Anzeigebilds erzeugt wird.

Es ist auch möglich, dass das Anzeigebild und das zeitlich veränderliche Lichtmuster in unterschiedlichen Spektralbereichen erzeugt werden.

Weitere Merkmale und Vorteile der Erfindung ergeben sich aus der nachfolgenden Beschreibung und aus den Zeichnungen, auf die Bezug genommen wird. In diesen zeigen:
- Figur 1 eine perspektivische Rückansicht eines optischen Anzeige- und Bedienelements gemäß einer ersten Ausführungsform der Erfindung;
- Figur 2 eine perspektivische Frontansicht des optischen Anzeige- und Bedienelements gemäß Figur 1;
- Figur 3 eine Frontansicht eines optischen Anzeige- und Bedienelements gemäß einer zweiten Ausführungsform der Erfindung;
- Figur 4 eine Rückansicht des optischen Anzeige- und Bedienelements gemäß Figur 3;
- Figur 5 eine perspektivische Frontansicht eines optischen Anzeige- und Bedienelements gemäß einer dritten Ausführungsform der Erfindung;
- Figur 6 einen Lichtmustersatz eines erfindungsgemäßen Verfahrens zur optischen Positionsbestimmung;
- Figur 7 ein Anzeigebild gemäß eines erfindungsgemäßen Verfahrens zur optischen Positionsbestimmung;
- Figur 8 ein flächiges Lichtmuster gemäß eines erfindungsgemäßen Verfahrens;
- Figur 9 das Anzeigebild gemäß Figur 7 moduliert mit dem Lichtmuster gemäß Figur 8; und
- Figur 10 das Anzeigebild gemäß Figur 7 moduliert mit einem komplementären Lichtmuster zum Lichtmuster gemäß Figur 8.

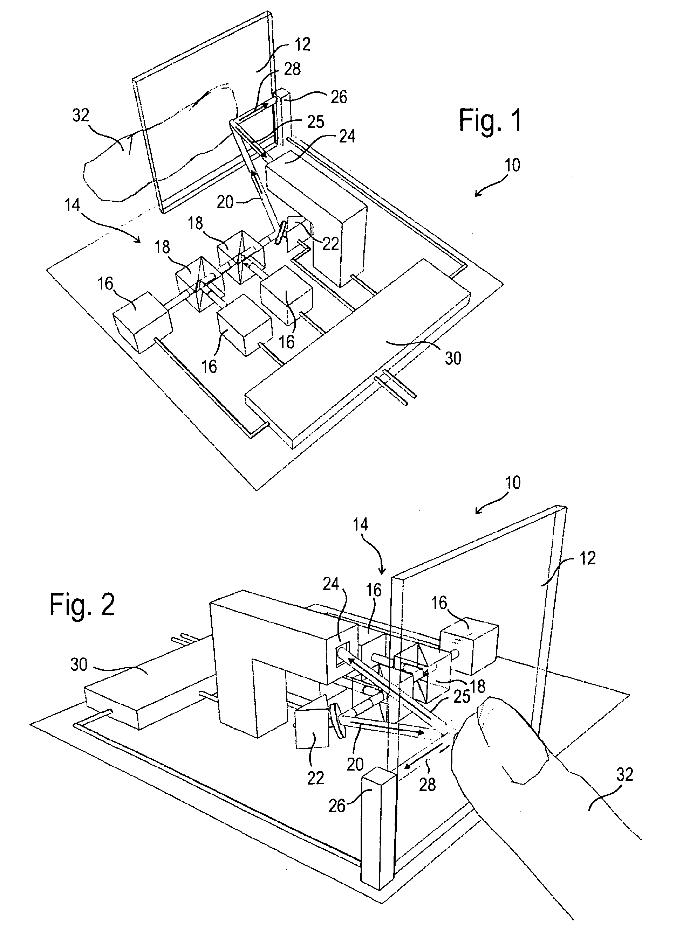

Figur 1 und Figur 2 zeigen eine erste Ausführungsform eines optischen Anzeige- und Bedienelements 10 mit einem zumindest teilweise transparenten Anzeigebildschirm 12. Eine Lichtquelle 14 umfasst drei verschiedenfarbige Lichtdioden 16, deren Licht mithilfe von Lichtmischern 18 zu einem gemeinsamen Lichtstrahl 20 vereinigt wird.

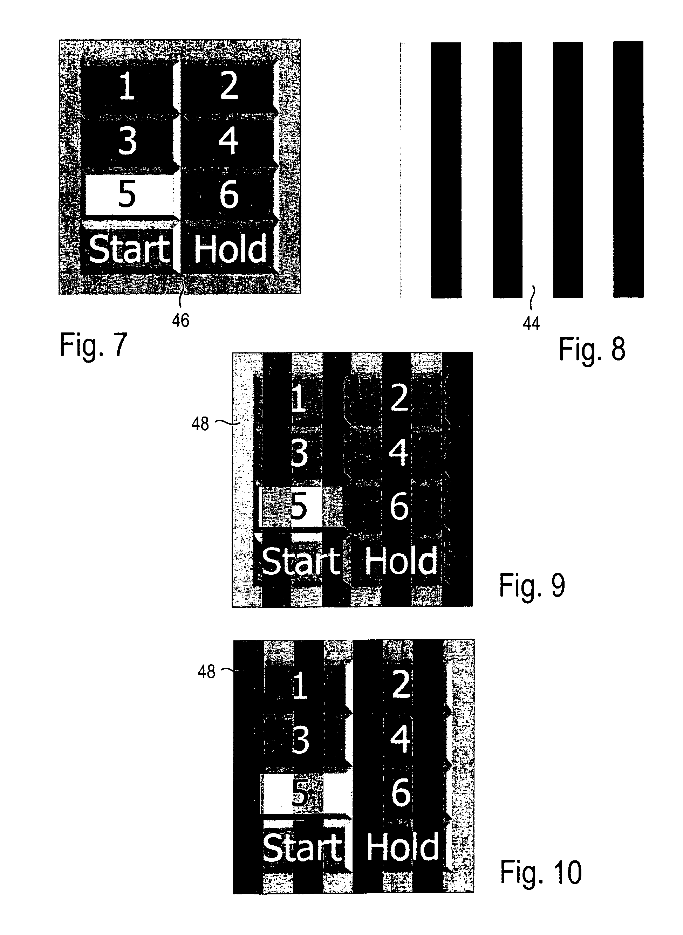

Der Lichtstrahl 20 wird mittels einer Ablenkeinheit 22 auf die Rückseite des Anzeigebildschirms 12 umgelenkt. Durch zeilenweises Abtasten des Anzeigebildschirms 12 und eine entsprechende Variation der Lichtintensität der verschiedenen Lichtdioden 16 wird ein auf dem Anzeigebildschirm 12 sichtbares Anzeigebild 46 erzeugt (vgl. Figur 7).

Zwei Lichtsensoren 24 sind vorgesehen, die am Anzeigebildschirm 12 gestreutes Licht erfassen können. Ein erster Lichtsensor 24 ist im Wesentlichen in senkrechter Richtung vom Anzeigebildschirm 12 beabstandet angeordnet, um am Anzeigebildschirm 12 einfach gestreutes Licht 25 zu erfassen.

Ein zweiter Lichtsensor 26 ist seitlich am Anzeigebildschirm 12 angeordnet und erfasst im Anzeigebildschirm 12 mehrfach reflektiertes Licht 28, wobei der Anzeigebildschirm 12 als Lichtleiter wirkt. Es ist auch möglich, dass nur einer der beiden Lichtsensoren 24, 26 vorgesehen ist. Die beiden Lichtsensoren 24, 26 sind jeweils als einfache, einkanalige Lichtsensoren ausgebildet.

Die von den Lichtsensoren 24, 26 erfasste Intensität des gestreuten Lichts 25, 28 wird als zeitliches Signal an eine Steuer- und Verarbeitungseinheit 30 weitergeleitet.

Das optische Anzeige- und Bedienelement 10 ermöglicht die Positionsbestimmung eines am Anzeigebildschirm 12 angeordneten Objekts 32. In der ersten Ausführungsform ist das optische Anzeige- und Bedienelement 10 als Berührungsbildschirm ausgebildet, welcher durch eine Berührung des Anzeigebildschirms 12 mit dem Objekt 32, in den Figuren einem Finger oder alternativ einem Zeigestab, bedient werden kann.

Die Position des Objekts 32 wird nach dem im Folgenden beschriebenen Verfahren bestimmt. Die Rückseite des Anzeigebildschirms 12 wird mit einem zeitlich veränderlichen Lichtmuster beleuchtet, welches durch Abtasten der Rückseite des Anzeigebildschirms 12 mit dem Lichtstrahl 20 erzeugt wird. Durch das Beleuchten der Rückseite des Anzeigebildschirms 12 wird ein Anzeigebild auf dem Anzeigebildschirm 12 erzeugt, welches insbesondere zur veränderlichen Wiedergabe von Informationen, beispielsweise einer Menüsteuerung, dient.

Das am Anzeigebildschirm 12 gestreute Licht wird durch die Lichtsensoren 24 in Form eines zeitlichen Signals erfasst. Jedem Zeitpunkt ist somit ein Punkt am Anzeigebildschirm 12 zugeordnet, der zu diesem Zeitpunkt beleuchtet wird und an dem das Licht gestreut wird.

Die Position des Objekts 32 wird durch zeitliche Korrelation des erfassten zeitlichen Signals mit dem zeitlich veränderlichen Lichtmuster bestimmt. In der gezeigten Ausführungsvariante tastet der Lichtstrahl 20 die gesamte Oberfläche des Anzeigebildschirms 12 zeilenweise ab. Im Bereich des Berührungspunkts des Objekts 32 am Anzeigebildschirm 12 wird von den Lichtsensoren 24, 26 ein verändertes zeitliches Signal erfasst.

Die Steuer- und Verarbeitungseinheit 30 vergleicht das zeitliche Signal der Lichtsensoren 24, 26 mit dem zeitlich veränderlichen Lichtmuster des abtastenden Lichtstrahls. Befindet sich das Objekt 32 an der Oberfläche des Anzeigebildschirms 12, so wird in dieser Region die Streuung des Lichts am Anzeigebildschirm 12 verändert. Die Position des Lichtstrahls 20 auf dem Anzeigebildschirm 12 zum Zeitpunkt der Signaländerung entspricht somit der Position des Objekts 32.

Die Lichtsensoren 24, 26 können als einkanalige Lichtsensoren ausgebildet sein, die jeweils den gesamten Anzeigebildschirm 12 erfassen können. Aufgrund der Benutzung der zeitlichen Information des zeitlichen veränderlichen Lichtsignals ist keine zweidimensionale Bilderfassung und Bildanalyse oder die Erfassung mehrerer Farbkanäle notwendig.

Das zeitlich veränderliche Lichtmuster kann zusätzlich eine zeitliche Modulierung aufweisen, wobei beispielsweise die Helligkeit des Lichtstrahls 20, insbesondere auch einer einzelnen spektralen Komponente, während des zeilenweisen Abtastens zeitlich moduliert wird, wobei die Modulation vorzugsweise mit bloßem Auge nicht erkennbar ist.

Es ist auch möglich, dass die Lichtquelle 14 Licht in einem nicht sichtbaren Spektralbereich erzeugt, wodurch sich das veränderliche Lichtmuster unabhängig von einem sichtbaren Anzeigebild, welches auf den Anzeigebildschirm 12 projiziert wird, erzeugen lässt.

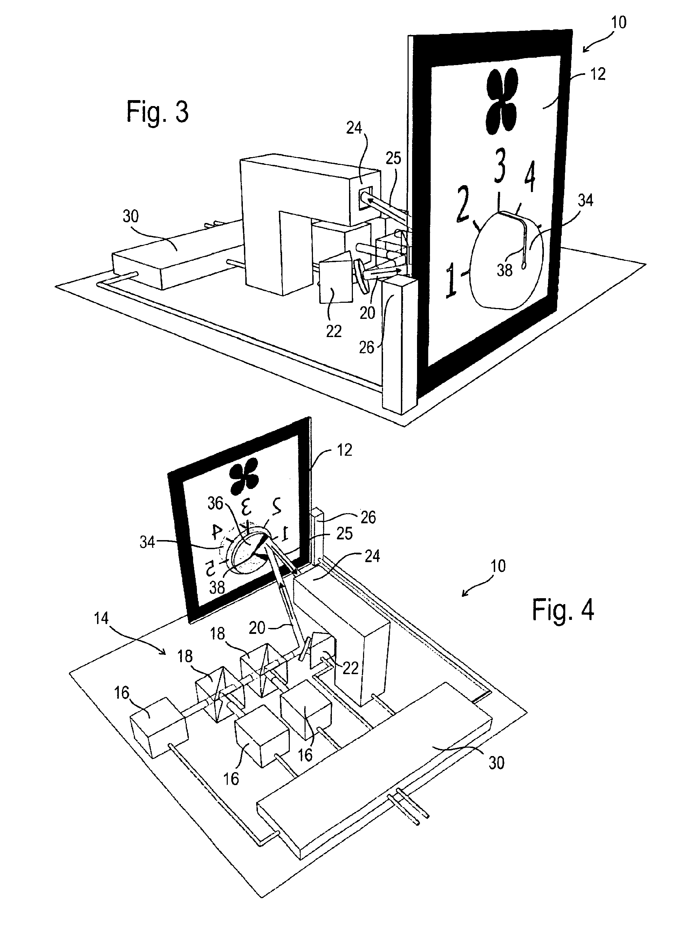

In den Figuren 3 und 4 ist eine zweite Ausführungsform des optischen Anzeige - und Bedienelements 10 dargestellt, welches analog zur ersten Ausführungsform ausgebildet ist und ein am Anzeigebildschirm 12 angebrachtes Bedienelement 34 aufweist. In der gezeigten Ausführungsform ist das Bedienelement 34 ein Drehknopf, der um eine Drehachse drehbar an einer festen Position des Anzeigebildschirms 12 angebracht ist.

Auf der der Lichtquelle 14 zugewandten Seite des Bedienelements 34 ist eine optische Codierung 36 vorgesehen, welche eine Position des Bedienelements codiert. In der in Figur 4 gezeigten Darstellung ist die optische Codierung 36 durch zwei sich radial von der Drehachse aus erstreckende Streifen gebildet. Je nach Drehposition des Bedienelements 34 nehmen die sich radial erstreckenden Streifen der optischen Codierung 36 unterschiedliche Positionen am Anzeigebildschirm 12 an. Es ist auch möglich, dass eine andere optische Codierung am Bedienelement 34 vorgesehen ist.

Das Bedienelement 34 weist einen integrierten Lichtleiter 38 auf, welcher durch die Lichtquelle 14 beleuchtet werden kann. Das Licht der Lichtquelle 14 wird in den Lichtleiter eingekoppelt und kann zur Beleuchtung und Kennzeichnung des Bedienelements verwendet werden. Durch Beleuchten des rückseitigen Endes des Lichtleiters 38 können entsprechende Markierungen des Bedienelements 34 mit beliebigen Farben illuminiert werden.

Das Verfahren zur Positionsbestimmung erfolgt analog zur ersten Ausführungsform, wobei das zu bestimmende Objekt 32 das Bedienelement 34 ist, wobei die Position der optischen Codierung 36 mit den sich radial erstreckenden Streifen bestimmt wird. Aus der Position der optischen Codierung 36 ist die Stellung des Bedienelements 34 bekannt.

Analog zur ersten Ausführungsform eine Funktion als Berührungsbildschirm vorgesehen sein, die eine Positionsbestimmung eines Fingers oder Zeigestabs am Anzeigebildschirm 12 zusätzlich zur Bestimmung der Stellung des Bedienelements 34 vorsieht.

Alternativ kann die Funktion des Anzeigebildschirms 12 auf die Anzeige von Informationen beschränkt sein, wobei in einem solchen Fall die Positionsbestimmung auf den Bereich des Bedienelements 34 und dessen optischer Codierung 36 räumlich begrenzt sein kann.

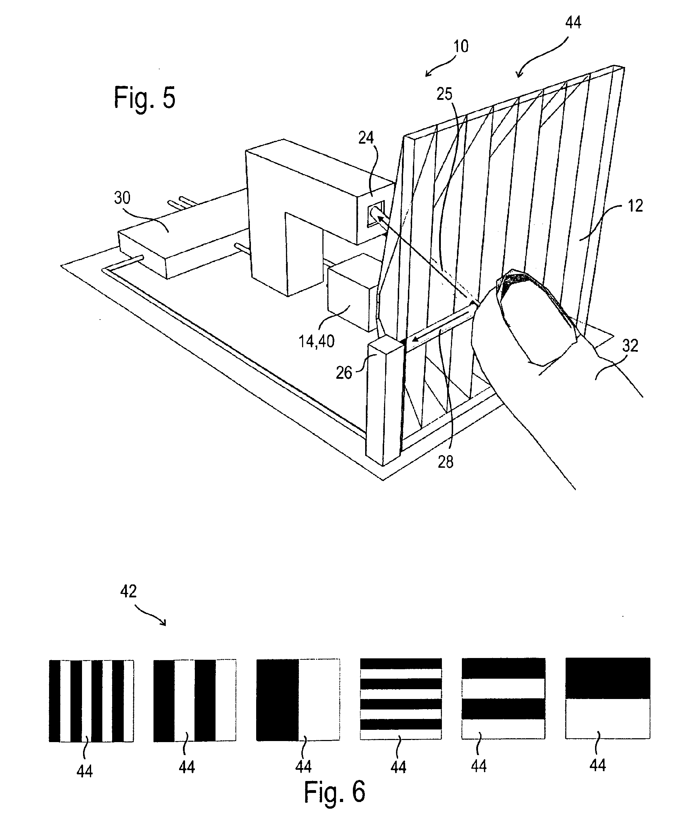

Eine dritte Ausführungsform eines Anzeige- und Bedienelements 10 ist in Figur 5 dargestellt. Die Lichtquelle 14 ist als Projektionseinheit 40 ausgebildet, welche eine flächige Beleuchtung des Anzeigebildschirms 12 ermöglicht. Die Projektionseinheit 40 ist beispielsweise ein DLP-Chipprojektor mit LED-Lichtquelle.

Die Lichtsensoren 24 und 26 sind analog zur ersten Ausführungsform ausgebildet.

Die Projektionseinheit 40 kann den Anzeigebildschirm 12 mit einer zeitlichen Sequenz verschiedener flächiger Lichtmuster 44 beleuchten, wobei die zeitliche Sequenz der verschiedenen flächigen Lichtmuster 44 ein zeitlich veränderliches Lichtmuster zur Positionsbestimmung erzeugt. In Figur 5 wird ein Lichtmuster auf den Anzeigebildschirm 12 projiziert, welches jeweils vier helle und dunkle vertikale Streifen aufweist.

Eine vollständige zeitliche Sequenz der flächigen Lichtmuster ist in Figur 6 dargestellt. Das erste Lichtmuster 44 entspricht dem in Figur 5 gezeigten Lichtmuster 44 mit jeweils vier vertikalen hellen und dunklen Streifen. Die beiden darauffolgenden Lichtmuster 44 zeigen jeweils zwei bzw. einen hellen Streifen, die jeweils doppelt so breit sind wie die Streifen des vorherigen Lichtmusters 44.

Die darauffolgenden drei Lichtmuster 44 umfassen analog vertikal ausgebildete Streifen. Der vollständige Satz der Lichtmuster 44 ermöglicht eine iterative Positionsbestimmung des Berührungspunktes des Objekts 32. Es sind auch andere Muster oder andere zeitliche Abfolgen der Muster möglich. Insbesondere ist es vorgesehen, nach jedem Lichtmuster 44 ein entsprechendes komplementäres Lichtmuster zu projizieren.

Gemäß einer bevorzugten Verfahrensvariante wird das Anzeigebild 46, gezeigt in Figur 7, mit einem Lichtmuster 44, gezeigt in Figur 8, aus dem Lichtmustersatz 42 moduliert. Das modulierte Anzeigebild 48 ist in Figur 9 gezeigt.

Vorzugsweise ist jeweils ein weiteres Lichtmuster vorgesehen, welches komplementär zu einem vorhergehenden Lichtmuster ausgebildet ist, wobei Figur 10 das mit dem komplementären Lichtmuster modulierte Anzeigebild zeigt.

Die zeitliche Sequenz der flächigen Lichtmuster läuft so schnell ab, dass die einzelnen Lichtmuster nicht mit dem bloßen Auge wahrgenommen werden können. Dazu beträgt die Lichtmusterfrequenz mehr als 16 Lichtmuster pro Sekunde. Das Auge mittelt die schnelle Folge des flächigen Lichtmusters 44 zu einem unmodulierten Mittelwert, sodass der Sinneseindruck dem unmodulierten Anzeigebild 46 in Fig. 7 entspricht.

Das räumliche Auflösungsvermögen des Positionsbestimmungsverfahrens wird im iterativen Verfahren durch die Anzahl der flächigen Lichtmuster 44 in einem Lichtmustersatz 42 bestimmt.

In den gezeigten Ausführungsformen sind jeweils mehrfarbige Lichtquellen 14 vorgesehen, die eine mehrfarbige Beleuchtung und Anzeige des Anzeigebildschirms 12 ermöglichen. Es ist jedoch auch möglich, dass eine monochrome Anzeige in einer beliebigen Farbe durch eine entsprechend einfarbige Lichtquelle vorgesehen ist.

Die Lichtquelle 14 kann das zeitlich veränderliche Lichtmuster in einer nicht sichtbaren Spektralkomponente erzeugen, wodurch das zeitlich veränderliche Lichtmuster unabhängig vom Anzeigebild 46 erzeugt werden kann.

Es können auch unabhängige Lichtquellen zur Erzeugung des Anzeigebilds und zur Erzeugung des zeitlich veränderlichen Lichtmusters vorgesehen sein.

## Patentansprüche

1. Optisches Anzeige- und Bedienelement (10) mit einem zumindest teilweise transparenten Anzeigebildschirm (12), zumindest einer Lichtquelle (14) zur Beleuchtung einer Rückseite des Anzeigebildschirms (12), und zumindest einem Lichtsensor (24, 26) zur Erfassung eines zeitlichen Signals des am Anzeigebildschirm (12) gestreuten Lichts (25, 28),
**dadurch gekennzeichnet, dass**
die Lichtquelle (14) ausgebildet ist, um ein zeitlich veränderliches Lichtmuster bei der Beleuchtung der Rückseite des Anzeigebildschirms (12) erzeugen zu können, und eine Steuer- und Verarbeitungseinheit (30) vorgesehen ist, welche ausgebildet ist, um das durch den Lichtsensor (24, 26) erfasste zeitliche Signal in Verbindung mit dem zeitlich veränderlichen Lichtmuster auswerten zu können und aus dieser Auswertung eine Position zumindest eines am Anzeigebildschirm (12) angeordneten Objekts (32) bestimmen zu können.

2. Optisches Anzeige- und Bedienelement nach Anspruch 1, **dadurch gekennzeichnet, dass** eine Ablenkeinheit (22) vorgesehen ist, welche zur Erzeugung des zeitlich veränderlichen Lichtmusters ein Abtasten des Anzeigebildschirms (12) durch einen Lichtstrahl (20) der Lichtquelle ermöglicht.

3. Optisches Anzeige- und Bedienelement nach Anspruch 1, **dadurch gekennzeichnet, dass** die Lichtquelle (14) ausgebildet ist, um den Anzeigebildschirm (12) mit einer zeitlichen Sequenz verschiedener flächiger Lichtmuster, insbesondere Helligkeitsmuster, zur Erzeugung des zeitlich veränderlichen Lichtmusters beleuchten zu können.

4. Optisches Anzeige- und Bedienelement nach Anspruch 3, **dadurch gekennzeichnet, dass** die zeitliche Sequenz der flächigen Lichtmuster zumindest einen Lichtmustersatz umfasst, wobei der Lichtmustersatz zeitlich aufeinanderfolgende Lichtmuster aufweist, welche eine iterative Positionsbestimmung ermöglichen.

5. Optisches Anzeige- und Bedienelement nach Anspruch 3 oder 4, **dadurch gekennzeichnet, dass** die zeitliche Sequenz der flächigen Lichtmuster so schnell abfolgt, vorzugsweise mit aufeinanderfolgenden komplementären Lichtmustern, dass die einzelnen Lichtmuster nicht mit dem bloßem Auge wahrgenommen werden können, insbesondere mindestens 16 Lichtmuster pro Sekunde.

6. Optisches Anzeige- und Bedienelement nach einem der vorhergehenden Ansprüche, **dadurch gekennzeichnet, dass** die Lichtquelle (14) ausgebildet ist, um den Anzeigebildschirm (12) mit einem Anzeigebild zu beleuchten, wobei das Anzeigebild mit einem flächigen oder zeitlich veränderlichen Lichtmuster moduliert ist.

7. Optisches Anzeige- und Bedienelement nach einem der vorhergehenden Ansprüche, **dadurch gekennzeichnet, dass** die Lichtquelle (14) eine IR-Lichtquelle ist.

8. Optisches Anzeige- und Bedienelement nach einem der Ansprüche 1 bis 6, **dadurch gekennzeichnet, dass** die Lichtquelle (14) sichtbares Licht erzeugen kann.

9. Optisches Anzeige- und Bedienelement nach einem der vorhergehenden Ansprüche, **dadurch gekennzeichnet, dass** das Anzeige- und Bedienelement (10) ein Berührungsbildschirm ist.

10. Optisches Anzeige- und Bedienelement nach einem der vorhergehenden Ansprüche, **dadurch gekennzeichnet, dass** ein am Anzeigebildschirm (12) angebrachtes Bedienelement (34) vorgesehen ist, welches auf einer der Lichtquelle (14) zugewandten Seite eine optische Codierung (36) aufweist, welche eine Position des Bedienelements (34) codiert.

11. Optisches Anzeige- und Bedienelement nach Anspruch 10, **dadurch gekennzeichnet, dass** das Bedienelement (34) einen integrierten Lichtleiter (38) aufweist, welcher durch die Lichtquelle (14) beleuchtet werden kann.

12. Optisches Anzeige- und Bedienelement nach einem der vorhergehenden Ansprüche, **dadurch gekennzeichnet, dass** zumindest ein Lichtsensor (24) anordnet ist, um vom Anzeigebildschirm (12) einfach rückgestreutes Licht (25) zu empfangen.

13. Optisches Anzeige- und Bedienelement nach einem der vorhergehenden Ansprüche, **dadurch gekennzeichnet, dass** zumindest ein Lichtsensor (26) anordnet ist, um ein im Anzeigebildschirm (12) mehrfachreflektiertes Licht (28) zu empfangen.

14. Optisches Anzeige- und Bedienelement nach einem der vorhergehenden Ansprüche, **dadurch gekennzeichnet, dass** der zumindest eine Lichtsensor (24), (26) ein einkanaliger Lichtsensor ist.

15. Verfahren zur optischen Positionsbestimmung eines Objekts (32), welches an einem zumindest teilweise transparenten Anzeigebildschirm (12) eines optischen Anzeige- und Bedienelements (10) angeordnet ist, mit den Verfahrensschritten:
a) Beleuchten einer Rückseite des Anzeigebildschirms (12) mit einem zeitlich veränderlichen Lichtmuster;
b) Erfassung eines zeitlichen Signals des am Anzeigebildschirm (12) und am Objekt gestreuten Lichts (25, 28);
c) Bestimmung der Position des Objekts (32) durch zeitliche Korrelation des erfassten zeitlichen Signals mit dem zeitlich veränderlichen Lichtmuster.

16. Verfahren nach Anspruch 15, **dadurch gekennzeichnet, dass** das zeitlich veränderliche Lichtmuster durch Abtasten der Rückseite des Anzeigebildschirms (12) mit einem Lichtstrahl (20) erzeugt wird.

17. Verfahren nach Anspruch 15, **dadurch gekennzeichnet, dass** das zeitlich veränderliche Lichtmuster durch eine zeitliche Sequenz verschiedener flächiger Lichtmuster erzeugt wird.

18. Verfahren nach Anspruch 17, **dadurch gekennzeichnet, dass** die zeitliche Sequenz verschiedener flächiger Lichtmuster aufeinanderfolgende Lichtmuster aufweist, welche eine iterative Positionsbestimmung ermöglichen.

19. Verfahren nach Anspruch 17 oder 18, **dadurch gekennzeichnet, dass** die zeitliche Sequenz der flächigen Lichtmuster so schnell abfolgt, insbesondere mindestens 16 Lichtmuster pro Sekunde, dass die einzelnen Lichtmuster nicht mit dem bloßem Auge wahrgenommen werden können.

20. Verfahren nach einem der Ansprüche 17 bis 19, **dadurch gekennzeichnet, dass** die zeitliche Sequenz verschiedener flächiger Lichtmuster aufeinanderfolgende komplementäre Lichtmuster aufweist.

21. Verfahren nach einem der Ansprüche 15 bis 20, **dadurch gekennzeichnet, dass** die Rückseite des Anzeigebildschirms (12) zur Erzeugung eines Anzeigebilds, vorzugsweise zur veränderlichen Wiedergabe von Informationen, beleuchtet wird.

22. Verfahren nach Anspruch 21, **dadurch gekennzeichnet, dass** das zeitlich veränderliche Lichtmuster durch eine zeitliche veränderliche oder flächige Modulation, vorzugsweise eine Amplitudenmodulation, des Anzeigebilds erzeugt wird.

23. Verfahren nach Anspruch 21, **dadurch gekennzeichnet, dass** das Anzeigebild und das zeitlich veränderliche Lichtmuster in unterschiedlichen Spektralbereichen erzeugt werden.
